Europäisches Patentamt

European Patent Office

Office européen des brevets

(19)

(11) Publication number: **0 307 197 B1**

## EUROPEAN PATENT SPECIFICATION

(12)

(45) Date of publication of patent specification: **29.06.94**  (51) Int. Cl.⁵: **B29C  61/06**, H05B 3/14

(21) Application number: **88308304.0**

(22) Date of filing: **08.09.88**

(54) **Conductive polymeric heater.**

(30) Priority: **09.09.87 GB 8721181**
**09.10.87 GB 8723761**
**09.10.87 GB 8723751**
**14.12.87 GB 8729121**
**09.09.87 GB 8721179**
**03.03.88 GB 8805072**

(43) Date of publication of application:
**15.03.89 Bulletin  89/11**

(45) Publication of the grant of the patent:
**29.06.94 Bulletin  94/26**

(84) Designated Contracting States:
**AT BE CH DE ES FR GB IT LI NL SE**

(56) References cited:
**EP-A- 0 157 640**
**FR-A- 2 015 723**
**FR-A- 2 286 528**

(73) Proprietor: **RAYCHEM LIMITED**
**Rolls House**
**7, Rolls Buildings**
**Fetter Lane**
**London, EC4 1NL(GB)**

(72) Inventor: **Gansbuehler, George Michael John**
**1 Austen Crescent**
**Liden**
**Swindon Wilts(GB)**
Inventor: **Park, George Barry**
**38 Restrop View**
**Purton**
**Nr. Swindon Wilts(GB)**
Inventor: **Jenson, Per**
**Sejroevej 5**
**DK-3550 Slangerup(DK)**

(74) Representative: **Auckland, Jacqueline et al**
**Raychem Limited**
**Intellectual Property Law Department**
**Faraday Road**
**Dorcan**
**Swindon, Wiltshire SN3 5HH (GB)**

EP 0 307 197 B1

Rank Xerox (UK) Business Services
(3.10/3.09/3.3.3)

## Description

This invention relates to a method and heater for joining two elongate substrates or repairing an elongate substrate. The heater comprises conductive polymeric material which is heated by the passage of electrical current therethrough.

Conductive polymeric materials and devices incorporating them are also well known. Reference may be made for example to U.S. Patents Nos. 2,952,761, 2,978,665, 3,243,753, 3,351,882, 3,571,777, 3,658,976, 3,757,086, 3,793,716, 3,823,217, 3,858,144, 3,861,029, 3,950,604, 4,017,715, 4,072,848, 4,085,286, 4,117,312, 4,151,126, 4,177,376, 4,177,446, 4,188,276, 4,237,441, 4,242,573, 4,246,468, 4,250,400, 4,252,692, 4,255,698, 4,271,350, 4,272,471, 4,304,987, 4,309,596, 4,309,597, 4,314,230, 4,314,231, 4,315,237, 4,317,027, 4,318,881, 4,327,351, 4,330,704, 4,334,351, 4,352,083, 4,361,799, 4,388,607, 4,398,084, 4,413,301, 4,425,397, 4,426,339, 4,426,633, 4,427,877, 4,435,639, 4,429,216, 4,442,139, 4,459,473, 4,470,898, 4,481,498, 4,476,450, 4,502,929; 4,514,620, 4,517,449, 4,534,889, and 4,560,498; J. Applied Polymer Science 19, 813-815 (1975), Klason and Kubat; Polymer Engineering and Science 18, 649-653 (1978), Narkis et al; European Application Nos. 38,713, 38,714, 38,718, 74,281, 92,406, 119,807, 133,748, 134,145, 144,187, 157,640, 158,410, 175,550 and 176,284; and Japanese Published Patent Application No. 59-122,524.

A tubular article which comprises conductive polymeric material is known from European Patent Application Publication No. 0157640. This document discloses a method of joining together two elongate substrates or of repairing a damaged substrate comprising:

(a) positioning in thermal contact with, and surrounding the substrate(s), a tubular article (2') comprising conductive polymeric material, having at least two electrical connection means 48.

(b) connecting the electrical connection means (48)(52) to a source of electrical power to cause the electrical current to flow between the electrical connection means (48)(52) substantially parallel to the faces of the article (2') thereby heating the conductive polymeric material of the article; and

(c) urging the conductive polymeric article (2') radially inward towards the substrate(s).

Such a method will hereinafter be called a method of the type referred. The document also discloses a tubular assembly comprising a conductive polymeric material article having at least two electrical connection means (48)(52), for connection to a source of electrical power to cause electrical current to flow between the electrical connections means thereby heating the conductive polymeric material. Such an article will hereinafter be called an assembly of the type referred. This tubular article is electroded by circumferential electrodes on both ends of the article so that current flows along the length of the article.

Another recoverable article which comprises conductive polymeric material is disclosed in GB-1562086 (MP212). This uses a plurality of fabric electrodes to follow the recovery of the article.

A heat recoverable article is an article the dimensional configuration of which may be made substantially to change when subjected to heat treatment. Usually these articles recover, on heating, towards an original shape from which they have previously been deformed, but the term "heat-recoverable", as used herein, also includes an article which, on heating, adopts a new configuration, even if it has not been previously deformed.

It is also known to be desirable to use for a conductive recoverable article, a material which exhibits a PTC (positive temperature coefficient of resistivity) effect, that is a sharp rise in resistivity at a particular, or over a short range of temperatures. The temperature or temperature range is known as the anomaly or switching temperature. Typically the material is selected to exhibit the sharp rise in temperature at or slightly above the recovery temperature of the article. The PTC effect minimises overheating and consequent so-called "thermal runaway" of the material. Materials which exhibit a PTC effect are typically referred to simply as PTC materials.

We have discovered a new method and article for joining or repairing elongate substrates using conductive polymeric material. The method uses a tubular article electroded along its length. The article may be of open (wraparound) or closed cross-section. The tubular article may be open at one or both ends. As used herein the term "wraparound" means a cover which can be positioned around a substrate, and longitudinal edges secured together to form a tubular article around the substrate. Where the article is wraparound it may comprise a simple flexible sheet. Alternatively it may be a multipart piece, for example two half shells. The article may be flexible allowing easy installation of the article. It is preferably also readily recoverable and removable.

A first aspect of the invention provides a method of the kind referred, characterised in that the two electrodes extend along the whole or part of the length of the tubular article and are circumferentially spaced apart from each other.

The radially inward movement may be caused by recovery of the conductive polymeric material, or by the use of an elastomeric material.

As used herein the term "electrical connection means" may mean actual electrodes, or may mean part of the article to which electrodes can conveniently be attached.

Where the article for joining or repairing elongate substrates is heat recoverable, it is preferably recovered into thermal contact with the substrate to be heated. By "recovery into thermal contact" we mean at least part of the heater is in thermal contact with the substrate after recovery. The recovery step may be carried out electrically, for example by connecting the electrodes to an electrical power source to cause current to flow through the article and heat it. Alternatively the article may be recovered by non-electrical means, e.g. a heat gun. Where the article is recovered electrically the same or different power source at the same or different voltage and/or current may be used to recover the article and then heat the substrate.

In one embodiment according to the invention the joining or repair is effected by introducing a heat softenable material between the conductive polymeric material and the substrate. This heat softenable material flows on heating of the conductive polymeric material. Thus where two substrate are to be joined it may flow and bond the substrates to each other, or it may flow to bond one or both substrates to the heater itself. Where a substrate is damaged and to be repaired, the heat softenable material may flow to cover and/or fill the damaged area. The softenable material may be polymeric. It may also be an adhesive.

Where a heat softenable material is used this may be provided in any suitable form. It may be provided as a discrete piece, or as a lining partially or totally covering the inner surface of the article. For a repair operation, it can conveniently be provided as a discrete patch positioned over the damaged area.

Where a heat softenable material is used, the article itself may be removed after flowing of the heat softenable material. To facilitate this a release member is preferably provided between the heat softenable material and the conductive polymeric material.

In another embodiment, the article is used to join two abutting, or telescoped, preferably polymeric substrates. The substrates preferably comprise compositions that are compatible with each other or with the material of the heater so that the substrates are mutually fusible, or fusible with the heater, one composition wetting the other composition to cause the fusion.

Where an article is used to join two abutting or telescoped substrates, an insert member is preferably used to prevent collapse of the inner substrates.

The term "fusion", is used herein to mean that sufficient molecular compatibility exists between the fusible components to be joined that a bond forms which will provide mechanical performance equal to or greater than that of the substrate. This may be through viscoelastic contact as defined by J.N. Anand in Adhesion 1, 1969, pages 16 through 23 and Adhesion 2, 1970, pages 16 through 22, or through a process of molecular diffusion across the polymer/polymer interface, such that, within the interfacial region there is a continuous concentration gradient of one polymer into the other.

Those skilled in the art will have no difficulty in determining whether two compositions are compatible. Guidelines to the compatibility of polymers are disclosed in European Patent Application Publication No. 0157640.

Where the substrates are mutually fusible the heater is preferably arranged to heat the pipes to a temperature sufficient to cause fusion therebetween. After fusion, the heater may be left in place. This may provide mechanical reinforcement or environmental protection. Alternatively the heater may be removed. Where the heater material is itself compatible with the material of the substrates it may fuse to the substrates on heating, and therefore cannot easily be removed.

The tubular article according to the invention may be used, for example to join or repair pipes or cables or other elongate substrates. It may also be used to join a pipe-like structure to a cable. For example it may be used to join a cable passing through a bulkhead to a spigot pipe extending from the bulkhead.

The article used in the method according to the invention is preferably wraparound, and the method preferably comprises positioning a closure on the heater to form the wraparound into a tube of closed cross-section.

A second aspect of the invention provides an assembly of the type referred, characterised in that the article further includes a closure means for closing the wraparound article into a tubular article, and in that the electrical connection means extended along the whole, or part of the length of the tubular article, and are spaced circumferentially apart.

In one embodiment when the article comprises two or more parts jointed by two or more closures. All the parts or only some of the parts may be electrically conductive. Similarly all the parts or only some of the parts may be heat recoverable. Also some of the parts may be elastomeric. All the parts may be the same or different sizes. A number of examples are now given.

One embodiment uses two half shells joined by two closures. Both half shells are heat recoverable and comprise electrically heatable conductive polymeric material.

Another embodiment comprises two half shells joined by two closures. One half shell is heat recoverable and comprises electrically heatable conductive polymeric material. The other half shell may be heat stable, or electrically non-conductive, or both.

Another embodiment comprises two half shells joined by two closures. One half shell is heat-stable and comprises electrically conductive polymeric material. The other half shell comprises an elastomer.

Where closures are used in a wraparound article, electrical powering may be through the closure. Where there are two closures, powering may be through both. Where there is only one closure, powering may be through the closure and another electrode embedded in or on the surface of the heater.

According to the invention a radially inwardly directed force is applied to urge the conductive polymer into contact with the substrate. This is required to form the joint or repair of the substrates. The force may be applied for example by use of a heat recoverable material as the conductive material, or by the use of an elastomer.

In articles according to the invention, the wall thickness of the article may be varied along its length. Also two or more layers of different materials may be used. The second or additional layer may extend along the whole or along only part of the length of the article. They may have electrical properties e.g. room temperature resistivity and resistivity/temperature behaviour, that is the same as, or different to, that of the first material. As an example, the second or subsequent layers may comprise a material that exhibits traditional PTC behaviour. The effect of the additional layer(s) is that it (they) provide additional material through which electrical current can flow, and hence provide additional heating. By appropriate choice of the resistivity of the material of the additional layer(s) greater heating can be achieved than would be the case were a similar additional thickness of the first material used. This may be advantageous, for example to decrease recovery times in certain regions, or where a higher temperature is required. Therefore in some preferred embodiments second or subsequent layers of material different ot the first material are added in selected regions.

Similarly the thermal load of various sections of the article can be varied, for example by adjusting the thickness of the adhesive or sealant on the sections of the article. The sections with the thickest adhesive will take the longest to heat, and hence the amount of heating of the sections is varied.

Another example of using two layers of different materials is where certain properties, e.g. flame retardancy, solvent resistance, abrasion resistance, electrical insulation impact resistance, colour coding are required.

Where two or more layers are used these may be applied separately, for example by sequential extrusion or may be co-extruded.

Any suitable materials can be used for the conductive polymeric material. Preferably the material is flexible to allow easy installation, and where appropriate, removal of the heater. By flexible is meant the material can be bent by hand around a four inch mandrel, preferably a one inch mandrel by hand.

For certain embodiments the article preferably comprises a material that has a pseudo PTC effect, with a pseudo PTC radio (ratio of peak resistivity to resistivity at $25°C$) in the range $1^1/_2$ to 10. Examples of suitable materials are described in European Application Publication No. 0307207 and European Application Publication No. 0307205. A definition of pseudo PTC ratio is also given in these specifications. One example of a suitable material that can be used in 59.7 parts by weight Elvax 770 (an EVA of 9.5 parts by weight by weight vinyl acetate content and a melt flow index of 0.8 as supplied by Du Pont), 39.8 parts by weight by weight of Vulcan P (a carbon black supplied by Cabot Corporation) and 0.5% by weight antioxidant.

Other suitable examples are:

| Polymer (parts by weight) | Carbon black (parts by weight) | Antioxidant (parts by weight) |
|---|---|---|
| Marlex* HXM50100 (59.4) | Vulcan* P (39.6) | (1.0) |
| Elvax* 460 (59.4) | Sevalco* N110 (39.6) | (1.0) |
| Sclair* 11D-1 (59.4) | Ensaco* MS (39.6) | (1.0) |
| Elvax* 460 (59.4) | Vulcan* P (39.6) | (1.0) |

* represents a trade mark.

The polymeric material used are as follows:
Marlex HXM 50100 is a HDPE supplied by Phillips

Elvax 460 is an EVA supplied by Du Pont
Sclair 11D-1 is a LLDPE supplied by Du Pont, Canada.
Vulcan P, Ensaco MS and Sevalco N110 are supplied by Cabot Corporation, Ensagri Willebroek NV and Sevalco Ltd. respectively.

The preferred pseudo PTC effect (which is lower than for standard PTC materials) acts to minimise overheating of any particular region.

The article preferably has the electrical characteristics of the articles described in European Patent Publication No.0307207. Articles according to that invention are laminar, are at least partly expanded from X% to Y% to make them heat recoverable and comprise a conductive polymeric material the resistivity of which decreases on expansion as measured in the direction of current flow, in at least part of the expansion range. Other articles according to that invention are heat recoverable, comprise a conductive polymeric material which has a resistivity which increases on recovery as measured in the direction of current flow, throughout the temperature range 20°C to $T_e$ (extrapolated end temperature as measured according to ASTM D3418-82).

Other articles according to that invention have a so called pseudo PTC ratio (peak resistivity : resistivity at 25°C) in the range $1\frac{1}{2}$ to 10, and are connected to electrodes so that current flows parallel to the faces of the article. Preferably the articles are expanded to render them recoverable and the composition of the articles decreases when expanded by 25% by more.

The pseudo PTC effect, in the same way as a traditional PTC effect, means that if one region becomes hotter its resistivity will increase and "switch-off", current being directed to adjacent regions. Because of the electrode configuration, current flows around the entire circumference of the heater. This means that if one circumferential region temporarily "switches-off" electrical current and heat to adjacent regions is advantageously maintained.

Another advantage of the electrode configuration is that long length heaters can be made.

In preferred embodiments of the invention, the electrodes come closer together on recovery. This lowers the resistance path between them. The resistivity of the material however simultaneously increases in the preferred case in which the material has a resistivity which reversibly decreases on expansion. The resistivity increase helps to compensate for the resistance path decrease. This feature also tends to shunt current away from any area recovered first or most. It can also be used to influence which areas current is initially directed to.

A substantial portion of the electrical current flows substantially parallel to the faces of the article, especially above the anomaly temperature of the composition. Preferably the electrical current flows in a direct path between the electrodes.

According to the invention, particularly when the preferred materials described in European Patent Publication No. 0307207 are used, it is possible to achieve recovery ratios of at least 2:1, 3:1 or even 4:1. This means small inventory is needed. It also enables substrates of different diameters to be joined or substrates of non uniform diameter to be repaired.

Where the electrical connection means are electrodes that extend along the length of the article, these may be on the surface of, or embedded in walls of the article. Alternatively they may be on the surface of or embedded in conductive polymeric, preferably heat stable, flanges extending along the length of the article. These flanges may project outwardly from or inwardly into the article, or both. These arrangements are described in European Patent Publication No. 0307206.

Where the electrodes extend along part only of the length of the articles, compensation (by way of increased resistance) is preferably provided at the end of the electrode towards the middle of the article. Without such compensation there could be current concentration at that point. This is described in European Patent Publication No. 0307200.

There may be a single pair of electrodes of opposite polarity, or multiples of pairs. For example, multiples of pairs of longitudinal electrodes may be arranged around the circumference of the article.

Embodiments of the invention will now be described, by way of example, wherein:

Figure 1 shows a heat-recovered article according to the invention used to heat and join polymeric pipes;
Figure 2 shows a heat recovered article according to the invention used to activate adhesive to join polymeric pipes;
Figure 3 shows a recovered article according to the invention used to repair a pipe;
Figure 4 shows a recovered article according to the invention used to join polymeric pipes of different diameters;
Figure 5 shows a wraparound article according to the invention which a heat softenable patch to repair a cable; and
Figure 6 shows different embodiments of wraparound articles having different positions of electrodes.

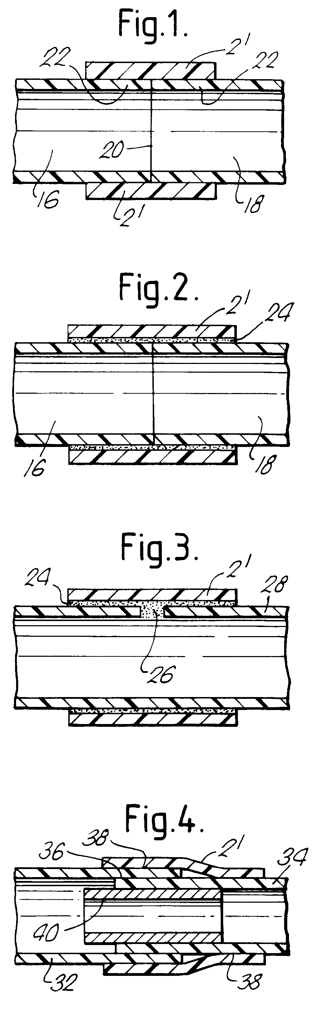

Figure 1 shows a article 2′ recovered over a joint between two polymeric pipes 16 and 18. The pipes comprise mutually fusible material (superscript indicates recovered part). When current is passed through the article 2′ the pipes 16 and 18 heat and flow and fuse at their abutting surfaces 20. After fusion the article 2′ can optionally be removed. It may provide reinforcement if retained.

In an alternative embodiment which may also be represented by Figure 1, pipes 16 and 18 are mutually fusible with the material of article 2′, but not necessarily with each other. In this case the heat causes the article 2′ to fuse to each pipe 16, 18 around the outer surface of each pipe 16,18 at the interface 22.

Figure 2 shows another embodiment in which an electrically recovered and heating article 2′ has caused an adhesive liner 24 on the heater to flow to seal the heater 2′ to the pipes 16 and 18, thereby joining them.

Figure 3 shows another embodiment in which an electrically recovered and heating article 2′ has caused an adhesive lining 24 to melt and flow to seal a hole 26 in damaged pipe 28.

Figure 4 shows a heater 2′ recovered over a joint between two polymeric pipes 32 and 34. Pipes 32 and 34 have different diameters. They are telescoped together so that an end section of pipe 34 sits inside pipe 32, of larger diameter. The pipes 32, 34 comprise mutually fusible material. When current is passed through the article 2′, the pipes 32 and 34 heat and flow and fuse at their overlapped surface 36. An insert 40 is used to prevent collapse of the inner pipe 34.

In an alternative arrangement which may also be represented by Figure 4, pipes 32 and 34 are mutually fusible with the material of article 2′. In this case heat causes the article 2′ to fuse to each of pipes 32 and 34 along interface surfaces 38.

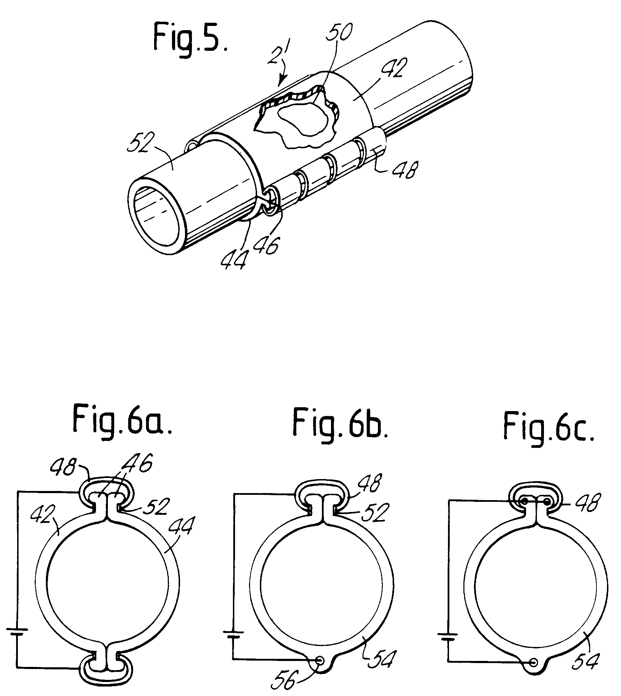

Figure 5 shows a recovered article 2 which comprises two half shells 42 and 44 of electrically conductive heat recoverable conductive polymeric material. The half shells include upstanding rails 46 at their longitudinally opposed edges, which are joined by channel closures 48. Under the article 2 is a discrete patch 50 of heat softenable material. This is caused to flow on heating of the conductive polymer article 2 by passage of electrical current. The flowed patch repairs a damaged area in the polyethylene cable jacket of substrate 52. The patch of heat softenable material may be selected of appropriate size depending on the size of the repair to be made. Where it is desired to remove the heater after repair, a release paper (not shown) may be included between article 2′ and the heat softenable material 50. The electrical current is supplied to the conductive polymeric material of article 2 via the channels (which are metal ) 48. To enhance conduction to the conductive polymeric material the outer surfaces of the rails are painted with silver paint strips (not shown in Figure 5).

Figure 6a to 6c show a number of arrangements for electroding wraparound heaters. The embodiment (a) is the same as Figure 5. Two half shells 42,44 are joined by closure 48 through which they are powered. The silver paint contacts are referenced as 52. In the embodiment (b) there is only a single wraparound part 54 closed by a channel 48. One electrode is provided by channel 48 and silver paint 52. Another electrode 56 is embedded in the wraparound part on the opposite side of the tubular part. In Figure 6c, there is only a single wraparound part joined by a closure 48. Both electrodes are embedded in the conductive polymeric material on opposite sides of the tubular part.

In the embodiment shown in Figure 5 and 6a, both the half shells 42 and 44 comprise heat recoverable electrically conductive polymeric material. In another embodiment only one half shell may be heat recoverable and/or electrically conductive. This means that only one side will recover and/or heat. However this may be sufficient to cause the required urging force and heating for certain applications. In yet another embodiment one half shell may be elastomeric and the other half shell electrically conductive (optionally heat recoverable). In this case the elastomeric half shell can cause the urging force and the electrically conductive half shell can cause the heat required. Other variations in which one or both half shells are heat recoverable and/or electrically conductive and/or elastomeric are also envisaged. Also the two half shells may be replaced by more than two parts, i.e. multiple segments may be used. In all cases the segments may be the same or different sizes.

Typical dimensions for an article according to the invention are as follows:

Extruded (prior to expansion thickness 4mm).

Expanded thickness 1 mm.

Length 2.5 cm to several metres. Typically 5 cm to 1 metre for joining cables or pipes.

Internal recovered diameter typically 1 cm. For some applications, typically up to 50 cm.

## Claims

1. A method of joining two elongate substrates (16, 18) or of repairing a damaged substrate comprising:

EP 0 307 197 B1

(a) positioning in thermal contact with, and surrounding the substrate(s), a tubular article (2') comprising conductive polymeric material, having at least two electrical connection means (48).

(b) connecting the electrical connection means (48)(52) to a source of electrical power to cause the electrical current to flow between the electrical connection means (48)(52) substantially parallel to the faces of the article (2') thereby heating the conductive polymeric material of the article; and

(c) urging the conductive polymeric article (2') radially inward towards the substrate(s), characterised in that the electrical connection means (48)(52) extend along the article, or part of the length of the tubular article (2'), and are circumferentially spaced apart from each other.

2. A method according to claim 1, characterised in that a heat softenable material (24)(10) is placed between the conductive polymeric material article (2') and the substrate(s) (16,18), the heat softenable material (34)(50) flowing on heating of the conductive polymeric material article (2') to join the substrate(s) (16, 18) to each other or to the article (2'), or flowing to repair the damaged substrate.

3. A method according to claim 2, characterised in that the heat softenable material (24)(50) is provided as a discrete piece (50), or as a lining (24) on the inside of the article (2').

4. A method according to claim 2, or 3 characterised in that a release member is provided between the heat softenable (5) material and the article (2'), and the article (2') is removed after flowing of the softenable material (50).

5. A method according to any preceding claim, for joining two abutting (16)(18) or telescoped (32, 34) substrates characterised in that the heating of the conductive polymeric material article (2') and the urging radially inward causes the abutting ends (16)(18) or telescoped portions (32)(34) of the substrates to fuse together.

6. A method according to any preceding claim, wherein the article (2') is wraparound (44)(54), and the method further comprises positioning a closure (48) on the article (2') to form the wraparound (54) into a tube of closed cross-section.

7. A tubular assembly (2')(48) comprising a conductive polymeric material article having at least two electrical connection means (48)(52), for connection to a source of electrical power to cause electrical current to flow between the electrical connections means thereby heating the conductive polymeric material, characterised in that the article is a wraparound tubular article and the assembly further includes closure means (48) for closing the wraparound article into a tubular article, and in that the electrical connection means (48)(52) extend along the whole, or part of the length of the tubular article (2') and are spaced circumferentially apart.

8. An article according to claim 7, characterised in that the article (2') is in two parts (42)(44) joined to each other by two closures (42)'.

9. An article according to claim 7 or claim 8 characterised in that all parts of the article (2') are electrically conductive, all the parts of the article (2') are heat recoverable, or one or some of the article parts are heat recoverable, or one or some of the article parts are elastomeric.

10. An article according to one of claims 7 to 9 characterised in that the electrical connection means (48)-(52) are electrodes.


**Patentansprüche**

1. Verfahren zum Verbinden von zwei langgestreckten Substraten (16, 18) oder zum Reparieren eines beschädigten Substrats, das folgende Schritte aufweist:

(a) Positionieren eines rohrförmigen Gegenstands (2'), der leitfähiges polymeres Material aufweist und mindestens zwei elektrische Verbindungseinrichtungen (48)(52) hat, in thermischen Kontakt mit dem Substrat (den Substraten) und dieses (diese) umgebend;

(b) Verbinden der elektrischen Verbindungseinrichtungen (48)(52) mit einer elektrischen Stromquelle, um den elektrischen Strom zu veranlassen, zwischen den elektrischen Verbindungseinrichtungen (48)(52) im wesentlichen parallel zu den Flächen des Gegenstands (2') zu fließen und dadurch das

7

EP 0 307 197 B1

leitfähige polymere Material des Gegenstands zu erwärmen; und

(c) Drängen des leitfähigen polymeren Gegenstands (2') radial nach innen in Richtung auf das Substrat (die Substrate),

dadurch gekennzeichnet, daß die elektrischen Verbindungseinrichtungen (48)(52) längs des Gegenstands oder eines Teils der Länge des rohrförmigen Gegenstands (2') verlaufen und umfangsmäßig voneinander beabstandet sind.

2. Verfahren nach Anspruch 1, dadurch gekennzeichnet, daß ein durch Wärme erweichbares Material (24)-(50) zwischen dem Gegenstand (2') aus leitfähigem polymerem Material und dem Substrat (den Substraten) (16, 18) angebracht wird, wobei das durch Wärme erweichbare Material (34)(50) bei Erwärmen des Gegenstands (2') aus leitfähigem polymerem Material fließt, um das Substrat (die Substrate) (16, 18) miteinander oder mit dem Gegenstand (2') zu verbinden, oder fließt, um das beschädigte Substrat zu reparieren.

3. Verfahren nach Anspruch 2, dadurch gekennzeichnet, daß das durch Wärme erweichbare Material (24)-(50) als ein diskretes Stück (50) oder als eine Auskleidung (24) an der Innenseite des Gegenstands (2') vorgesehen ist.

4. Verfahren nach Anspruch 2 oder 3, dadurch gekennzeichnet, daß ein Trennelement zwischen dem durch Wärme erweichbaren Material (50) und dem Gegenstand (2') vorgesehen ist und der Gegenstand (2') nach dem Fließen des erweichbaren Materials (50) entfernt wird.

5. Verfahren nach einem der vorhergehenden Ansprüche zum Verbinden von zwei aneinanderstoßenden (16)(18) oder ineinandergeschobenen (32, 34) Substraten, dadurch gekennzeichnet, daß das Erwärmen des Gegenstands (2') aus leitfähigem polymerem Material und das Drängen nach radial innen die aneinanderstoßenden Enden (16)(18) oder die ineinandergeschobenen Bereiche (32)(34) der Substrate veranlaßt, miteinander zu verschmelzen.

6. Verfahren nach einem der vorhergehenden Ansprüche, wobei der Gegenstand (2') eine Umwicklung (44)(54) ist und das Verfahren ferner den Schritt des Positionierens eines Verschlusses (48) auf dem Gegenstand (2') aufweist, um die Umwicklung (54) zu einem Rohr mit geschlossenem Querschnitt zu formen.

7. Rohrförmige Anordnung (2')(48), die einen Gegenstand aus leitfähigem polymerem Material aufweist, der mindestens zwei elektrische Verbindungseinrichtungen (48)(52) zur Verbindung mit einer elektrischen Stromquelle hat, um elektrischen Strom zu veranlassen, zwischen den elektrischen Verbindungseinrichtungen zu fließen und dadurch das leitfähige polymere Material zu erwärmen, dadurch gekennzeichnet, daß der Gegenstand ein rohrförmiger Umwickelgegenstand ist und die Anordnung ferner einen Verschluß (48) aufweist, um den Umwickelgegenstand zu einem rohrförmigen Gegenstand zu schließen, und daß die elektrischen Verbindungseinrichtungen (48)(52) längs der gesamten oder eines Teils der Länge des rohrförmigen Gegenstands (2') verlaufen und umfangsmäßig voneinander beabstandet sind.

8. Gegenstand nach Anspruch 7, dadurch gekennzeichnet, daß der Gegenstand (2') in zwei Teilen (42)(44) ist, die durch zwei Verschlüsse (48) miteinander verbunden sind.

9. Gegenstand nach Anspruch 7 oder 8, dadurch gekennzeichnet, daß alle Teile des Gegenstands (2') elektrisch leitfähig sind, alle Teile des Gegenstands (2') wärmerückstellbar sind oder einer oder einige der Teile des Gegenstands wärmerückstellbar sind oder einer oder einige der Teile des Gegenstands elastomer sind.

10. Gegenstand nach einem der Ansprüche 7 bis 9, dadurch gekennzeichnet, daß die elektrischen Verbindungseinrichtungen (48)(52) Elektroden sind.

**Revendications**

1. Procédé pour joindre deux substrats allongés (16, 18) ou pour réparer un substrat endommagé, consistant :

8

(a) à placer en contact thermique avec le ou les substrats, et autour du ou des substrats, un article tubulaire (2') comprenant une matière polymérique conductrice, ayant au moins deux moyens (48) de connexion électrique,

(b) à connecter les moyens (48, 52) de connexion électrique à une source d'énergie électrique pour faire circuler le courant électrique entre les moyens (48 et 52) de connexion électrique sensiblement parallèlement aux faces de l'article (2') de façon à échauffer la matière polymérique conductrice de l'article ; et

(c) à pousser l'article polymérique conducteur (2') radialement vers l'intérieur en direction du substrat ou des substrats,

caractérisé en ce que les moyens (48, 52) de connexion électrique s'étendent le long de l'article, ou sur une partie de la longueur de l'article tubulaire (2'), et sont espacés circonférentiellement l'un de l'autre.

2. Procédé selon la revendication 1, caractérisé en ce qu'une matière (24)(10) pouvant être ramollie par la chaleur est placée entre l'article (2') en matière polymérique conductrice et le substrat ou les substrats (16, 18), la matière (34, 50) pouvant être ramollie par la chaleur coulant sous l'effet d'un échauffement de l'article (2') en matière polymérique conductrice pour joindre le substrat ou les substrats (16, 18) l'un à l'autre ou à l'article (2'), ou coulant pour réparer le substrat endommagé.

3. Procédé selon la revendication 2, caractérisé en ce que la matière (24, 50) pouvant être ramollie par la chaleur est fournie sous la forme d'une pièce discrète (50), ou d'un revêtement (24) sur le côté intérieur de l'article (2').

4. Procédé selon la revendication 2 ou 3, caractérisé en ce qu'un élément anti-adhérent est prévu entre la matière (5) pouvant être ramollie par la chaleur et l'article (2'), et l'article (2') est enlevé après que la matière (50) pouvant être ramollie a coulé.

5. Procédé selon l'une quelconque des revendications précédentes, pour joindre deux substrats en butée (16, 18) ou assemblés télescopiquement (32, 34), caractérisé en ce que l'échauffement de l'article (2') en matière polymérique conductrice et la poussée radiale vers l'intérieur amènent les extrémités (16, 18) en butée ou les parties assemblées télescopiquement (32, 34) des substrats à se lier entre elles par fusion.

6. Procédé selon l'une quelconque des revendications précédentes, dans lequel l'article (2') est enroulé (44, 54), et le procédé consiste en outre à placer une fermeture (48) sur l'article (2') pour former l'enroulement (54) en un tube de section transversale fermée.

7. Assemblage tubulaire (2', 48) comprenant un article en matière polymérique conductrice ayant au moins deux moyens (48, 52) de connexion électrique, pour une connexion à une source d'énergie électrique afin de faire circuler un courant électrique entre les moyens de connexion électrique, et chauffant ainsi la matière polymérique conductrice, caractérisé en ce que l'article est un article tubulaire enroulé et l'assemblage comprend en outre un moyen de fermeture (48) pour fermer l'article enroulé en un article tubulaire, et en ce que les moyens (48, 52) de connexion électrique s'étendent sur la totalité ou une partie de la longueur de l'article tubulaire (2') et sont espacés circonférentiellement.

8. Article selon la revendication 7, caractérisé en ce que l'article (2') est en deux parties (42, 44) jointes l'une à l'autre par deux fermetures (42').

9. Article selon la revendication 7 ou la revendication 8, caractérisé en ce que toutes les parties de l'article (2') sont électriquement conductrices, toutes les parties de l'article (2') sont douées de reprise de forme à chaud, ou bien une ou certaines des parties de l'article sont douées de reprise de forme à chaud, ou bien une ou certaines des parties de l'article sont élastomériques.

10. Article selon l'une des revendications 7 à 9, caractérisé en ce que les moyens (48, 52) de connexion électrique sont des électrodes.

9

# Fig.1.

# Fig.2.

# Fig.3.

# Fig.4.

EP 0 307 197 B1

**Fig. 5.**

**Fig. 6a.**    **Fig. 6b.**    **Fig. 6c.**

11